# EUROPÄISCHE PATENTSCHRIFT

(11) **EP 1 053 092 B1**
(45) Veröffentlichungstag und Bekanntmachung des Hinweises auf die Patenterteilung: **22.10.2003**
(21) Anmeldenummer: 99907391.9
(22) Anmeldetag: 20.01.1999
(51) Int. Cl.: B29C 65/08

(54) **VORRICHTUNG ZUM BEARBEITEN EINER MATERIALBAHN MIT ULTRASCHALL**
DEVICE FOR PROCESSING A STRIP OF MATERIAL WITH ULTRASOUND
DISPOSITIF POUR TRAITER UNE BANDE DE MATERIAU AVEC DES ULTRASONS

(30) Priorität: 02.02.1998 DE 19803638
(43) Veröffentlichungstag der Anmeldung: 22.11.2000
(73) Patentinhaber: Eduard Küsters Maschinenfabrik GmbH & Co. KG, 47805 Krefeld (DE)
(72) Erfinder: KUBIK, Klaus, D-47918 Tönisvorst (DE)
(74) Vertreter: Kluin, Jörg-Eden, Dr. Dipl.-Phys.
(86) Internationale Anmeldenummer: EP9900346
(87) Internationale Veröffentlichungsnummer: WO99038666

(56) Entgegenhaltungen:
- EP-A- 0 421 019
- EP-A- 0 920 977
- WO-A-96/14202
- WO-A-97/01432
- DD-A- 281 038
- DE-A- 3 410 954
- DE-A- 3 921 653
- DE-A- 4 026 711
- GB-A- 2 278 312
- GB-A- 2 279 034
- US-A- 4 048 004
- US-A- 4 088 519

## Beschreibung

Die Erfindung bezieht sich auf eine Vorrichtung der dem Oberbegriff des Anspruchs 1 entsprechenden Art.

Eine derartige Vorrichtung geht aus der DE 195 26 354 C1 hervor. Die Bearbeitung besteht beispielsweise in der Verfestigung eines aus thermoplastischen Fasern bestehenden Vlieses durch stellenweise Verschmelzung der Fasern. Um zu einem optimalen Bearbeitungseffekt zu kommen, bedarf es einer sehr genauen Einhaltung des Abstandes zwischen der Sonotrode und dem Gegenwerkzeug bzw. der Hüllfläche des gegebenenfalls auf diesem angebrachten Reliefs. Aus diesem Grund ist bekannten Vorrichtung ein Sensor vorgesehen, der die Spalthöhe zwischen der Sonotrode und dem Gegenwerkzeug erfaßt und mit dessen Signal der Abstand geregelt wird. Die exakte und zuverlässige Erfassung der Spalthöhe ist jedoch ein schwieriges Unterfangen und bedarf einer aufwendigen Meßeinrichtung.

Die Einhaltung einer bestimmten Spalthöhe muß so genau erfolgen, da schon Temperaturschwankungen an der Sonotrode und die damit einhergehenden thermischen Ausdehnungen eine erhebliche Rolle spielen. Aus diesem Grund ist bei der Vorrichtung nach der DE 195 13 246 C2 ein die Temperatur der Sonotrode erfassender Sensor vorgesehen, mit dessen Signal die Spalthöhe beeinflußt wird. Auf diese Weise wird aber nur ein Teilaspekt der die Spalthöhe verändernden Größe erfaßt, nämlich nur die temperaturbedingten Verlagerungen.

Der Erfindung liegt die Aufgabe zugrunde, die Einhaltung eines gleichmäßigen Bearbeitungseffektes zu verbessern.

Diese Aufgabe wird durch die in Anspruch 1 wiedergegebene Erfindung gelöst.

Durch die Regelung der von der Sonotrode ausgeübten Kraft werden die anderen die Spalthöhe beeinflussenden Größe miterfaßt. Wird die Sonotrode heiß und verkleinert sich dadurch die Spalthöhe, so nimmt Kraft an der Sonotrode zu und muß die Sonotrode etwas von dem Gegenwerkzeug weggezogen werden. Schwankt die Materialdicke, so äußert sich dies in Schwankungen der Kraft, die mittels der Erfindung ausgeregelt werden können, so daß sich wieder ein gleichmäßiger Bearbeitungseffekt einstellt.

Die Kraftmessung berücksichtigt diejenige Größe, die die Folgen der anderen Einflußgrößen gewissermaßen miterfaßt. Eine derartige Regelung erfolgt mit einer Stellgröße, die unmittelbar für den Behandlungseffekt maßgeblich ist. Dabei ist die Kraftmessung, verglichen mit der Abstandsmessung, wesentlich einfacher. Gleichzeitig werden alle maßgeblichen Faktoren berücksichtigt, anders als bei der Temperaturmessung, die nur die darauf zurückzuführenden Änderungen der Spalthöhe berücksichtigen kann.

Wichtig ist die starre und formschlüssige Abstützung der Sonotrode. Gemeint ist natürlich eine konstruktiv erreichbare Starrheit, die ein elastisches Zurückweichen der Sonotrode unter den von der Materialbahn übertragenen Kräften weitestmöglich unterbindet. Dadurch kommt es zu keiner vertikalen Schwingantwort der Voschubeinheit, wenn die Sonotrode von der Materialbahn oder der Gravurwalze her angeregt wird. So sind sehr hohe Produktionsgeschwindigkeiten erreichbar.

Die Druckkraft der Sonotrode kann allerdings nur dann hinreichend exakt aufgenommen werden, und zur Regelung des Spaltes verwendet werden, wenn die Gravurdichte des Gegenwerkzeugs gleichbleibend ist, d.h. z.B. bei einer sich drehenden Gravurwalze als Gegenwerkzeug sich immer gleich viele Gravurpunkte (Kraftkonzentrationspunkte) unter dem Sonotrodenfuß befinden. Die Gravurdichte ist in diesem Sinn nicht gleichbleibend, wenn sich auf der Gravurwalze z.B. Längsstege (parallel zur Walzenachse) befinden. Die Kraft schwankt während der Rotation einer solchen Gravurwalze und hat an den Stellen der Längsstege Maxima. Die Kraft kann hierbei nicht eindeutig aufgenommen und als Grundlage für die Regelung verwendet werden. Es muß also ein einheitliches, homogenes Gravurmuster entsprechend einem gleichen Verschweißungs- oder Perforationsmuster vorliegen, damit bei Drehung der Walze eine quasi konstante Auflage gegeben ist.

Aus der nicht vorveröffentlichten EP 0 920 977 A1 ist eine weitere Vorrichtung zum Bearbeiten einer Bahn mit Ultraschall bekannt. Bei dieser wird zwar als Sensor zur Messung der Höhe des Bearbeitungsspaltes ein Kraftsensor eingesetzt, nicht bekannt ist jedoch, daß das Gegenwerkzeug eine konstante Gravurdichte aufweisen muß, um optimale Bearbeitungsergebnisse zu erzielen.

Wenn die Kraftmessung auf derjenigen Größe beruht, die unmittelbar für den Bearbeitungseffekt maßgeblich ist, so ist eine darauf beruhende Regelung nur dann optimal, wenn sie die Kraft frei von systematischen Fehlern erfassen kann.

Unter diesem Aspekt ist die Ausgestaltung nach Anspruch 2 wichtig, die dafür sorgt, daß die Erfassung der Kraft frei von Querkräften bleibt. Durch die gemeinsame Führung des Sonotrodenschlittens und des zusätzlichen Schlittens an der Geradführung erfaßt das Kraftmeßglied exakt nur diejenigen Kräfte, mit denen die Sonotrode gegen das Gegenwerkzeug angestellt wird.

Eine vorteilhafte Ausgestaltung des Antriebs ist Gegenstand der Ansprüche 3 bis 5.

Wesentlich an dieser Ausgestaltung ist die zwar längenvariable, aber bei einer bestimmten Länge starre Verbindung zwischen dem Schlitten, an dem der Antrieb angreift, und dem Maschinengestell. Durch die somit erzielte starre Abstützung der Sonotrode an dem Maschinengestell ist die Vorrichtung im Vergleich beispielsweise zu einer pneumatischen Anstellung der Sonotrode weniger empfindlichen gegen Schwingungen. Die Produktionsgeschwindigkeiten sind daher durch diese Ausgestaltung des Antriebs erhöhbar.

Der Gedanke der starren Abstützung der Sonotrode geht für sich genommen aus der DE 44 39 284 C2 hervor.

In der Zeichnung ist ein Ausführungsbeispiel der Erfindung schematisch dargestellt.
Fig. 1 zeigt eine Seitenansicht der Vorrichtung;
Fig. 2 zeigt einen Schnitt nach der Linie II-II in Fig. 1.

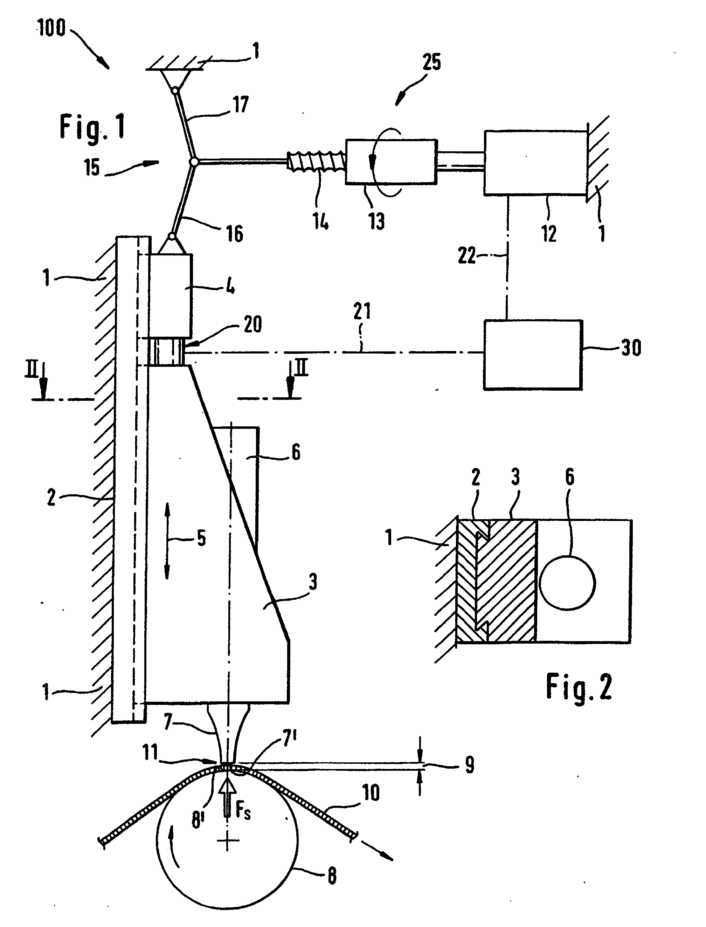

Die in Fig. 1 als Ganzes mit 100 bezeichnete Vorrichtung umfaßt eine am Maschinengestell 1 feste vertikale Geradführung in Gestalt einer Schwalbenschwanzschiene 2, an der ein erster Schlitten 3 und ein zweiter, zusätzlicher Schlitten 4 im Sinne des Pfeiles 5 verschiebbar gelagert sind.

An dem ersten Schlitten 3 ist eine Ultraschallerzeugungseinheit 6 fest angeordnet, die auf eine Sonotrode 7 wirkt, die radial gegen eine Reliefwalze 8 gerichtet ist, die das Gegenwerkzeug bildet. Die Reliefwalze 8 hat eine gleichmäßige Gravurdichte, so daß die Sonotrode 7 immer auf einen weitestgehend konstanten Auflagequerschnitt der Gravurerhebungen trifft. Zwischen der Stirnseite 7' der Sonotrode 7 und dem Umfang 8' der Gegenwalze 8 wird unter Belassung einer Spalthöhe 9 eine Materialbahn 10 hindurchgeführt, die beispielsweise aus einem Vlies aus thermoplastischen Fasern bestehen kann. Durch die hochfrequenten Kompressionen, die das Material zwischen den Scheiteln der Gravurerhebungen der Gegenwalze 8 und der Stirnseite 7' der Sonotrode erfährt, kommt es zu lokalen Temperaturerhöhungen bis zur Erweichung der thermoplastischen Fasern. Wenn es nur um eine Verfestigung eines Vlieses geht, muß die Erwärmung so dosiert werden, daß gerade ein Zusammenschmelzen der Fasern erfolgt, jedoch Durchbrüche in dem Material vermieden werden. Bei entsprechender Steuerung des Energieeintrags können solche Durchbrüche aber auch bewußt herbeigeführt werden, d.h. es kann nach dem Verfahren auch gelocht oder geschnitten werden. Der Energieeintrag, dem eine bestimmte Stelle der Materialbahn für die kurze Zeit des Passierens des Spalts 11 zwischen der Sonotrode 7 und der Gegenwalze 8 ausgesetzt ist, ist also für den Bearbeitungseffekt durchaus kritisch. Dieser Energieeintrag hängt von der in dem Spalt 11 herrschenden Kraft ab. Es ist plausibel, daß sich die Wirkungen der Ultraschallschwingungen um so stärker bemerkbar machen, je fester die Materialbahn in dem Spalt 11 zusammengedrückt wird.

Zwischen dem Schlitten 4 und dem Schlitten 3 ist ein Kraftmeßglied in Gestalt einer Kraftmeßdose 20 angeordnet, welches die von einem als Ganzes mit 25 bezeichneten Antrieb ausgeübte Kraft vollständig auf den Schlitten 3 überträgt und somit ein Signal abgibt, welches bis auf geringe Reibungsverluste an der Schwalbenschwanzschiene 2 die in dem Spalt 11 gegen die Gegenwalze 8 wirkende Kraft präsentiert.

Der als Ganzes mit 25 bezeichnete Antrieb umfaßt einen Schrittmotor 12, der am Maschinengestell 1 abgestützt ist und ein Gewindestück 13 verdreht, welches über eine Gewindespindel 14 auf ein als Ganzes mit 15 bezeichnetes Kniegelenk wirkt, dessen unterer Schenkel 16 an dem zweiten Schlitten 4 und dessen oberer Schenkel 17 am Maschinengestell 1 gelagert sind. Das Kniegelenk 16,17 im Verein mit dem selbsthemmenden Spindelantrieb 12,13,14 stellt eine im Rahmen des konstruktiv Möglichen starre Abstützung der Schlitten 3,4 und der Sonotrode 7 am Maschinengesteil 1 dar, an welchem auch die Gegenwalze 8 gelagert ist. Unter den von der Materialbahn 10 auf die Sonotrode 7 übertragenen Kräften weicht die Sonotrode 7 jedenfalls nicht merklich zurück. Der Schlitten 4 hält durch die Schrägstellung des Schenkels 16 sich ergebende seitliche Kraftkomponente von der Kraftmeßdose 20 fern.

Die Kraftmeßdose 20 kann auch an einer anderen Stelle der Kraftübertragung zwischen dem Antrieb 25 und dem Spalt 11 angeordnet werden, z.B. zwischen der Ultraschallerzeugungseinheit 6 und der Sonotrode 7 oder im Bereich des Kniegelenks 15, was aber wegen der Querkräfte besondere konstruktive oder schaltungsmäßige Zusatzmaßnahmen erfordert, um zu einem möglichst fehlerfrei die Kraft im Spalt 11 repräsentierenden Signal zu kommen. Entsprechendes gilt, wenn die Anstellung der Sonotrode 7 gegen die Gegenwalze 8 nicht mitten eines Kniegelenks 15, sondern mitten einer anderen Einrichtung erfolgt.

Das Signal der Kraftmeßdose 20 wird über die Leitung 21 einer Steuer- und Regeleinheit 30 zugeführt, die über eine Leitung 22 den Schrittmotor 12 steuert. Die Steuerung erfolgt so, daß die Kraft Fₛ in dem Spalt 11 konstant gehalten wird. Dadurch bleibt auch der Bearbeitungseffekt konstant, unabhängig davon, ob die Materialbahn 10 Dickenschwankungen aufweist, die Sonotrode 7 thermischen Dehnungen unterliegt oder die Walze 8 sich durchbiegt.

## Patentansprüche

1. Vorrichtung zum Bearbeiten einer kontinuierlich vorlaufenden Materialbahn (10),
mit einer eine Sonotrode (7) aufweisenden Ultraschallerzeugungseinheit (6),
mit einem einer der Sonotrode (7) gegenüberliegenden Gegenwerkzeug (8),
mit einem Maschinengestell (1), in welchem die Sonotrode (7) und das Gegenwerkzeug (8) abgestützt sind,
mit Mitteln zum Hindurchführen der Materialbahn (10) durch den Spalt (11) zwischen der Sonotrode (7) und dem Gegenwerkzeug (8)
und mit einem Antrieb (25) zum Anstellen der Sonotrode (7) gegen das Gegenwerkzeug (8) unter starrer und formschlüssiger Abstützung am Maschinengestell (1)
**dadurch gekennzeichnet,**
**daß** das Gegenwerkzeug (8) eine gleichbleibende Gravurdichte aufweist und zwischen den Antrieb (25) und die Sonotrode (7) ein Kraftmeßglied (20) eingeschaltet ist, dessen Signal zur Regelung des Antriebs (25) im Sinne der Erzielung einer konstanten Sonotrodenkraft (Fₛ) dient.

2. Vorrichtung nach Anspruch 1, **dadurch gekennzeichnet, daß** die Sonotrode (7) mit der Ultraschallerzeugungseinheit (6) an einem gemeinsamen Schlitten (3) an einer gegen das Gegenwerkzeug (8) gerichteten Geradführung (2) verschiebbar ist, daß an der Geradführung (2) auf der Seite des Angriffs des Antriebs (25) ein zusätzlicher Schlitten (4) verschiebbar und daß das Kraftmeßglied (20) zwischen den beiden Schlitten (3,4) angeordnet ist.

3. Vorrichtung nach Anspruch 2, **dadurch gekennzeichnet, daß** die Geradführung (2) an einem Maschinengestell (1) angeordnet ist und der Antrieb (25) ein mechanisches längenvariables Stellglied umfaßt, welches einerseits an dem Schlitten (4), andererseits an dem Maschinengestell (1) angreift.

4. Vorrichtung nach Anspruch 3, **dadurch gekennzeichnet, daß** das längenvariable Stellglied ein zwei Schenkel (16,17) aufweisendes Kniegelenk (15) umfaßt.

5. Vorrichtung nach Anspruch 4, **dadurch gekennzeichnet, daß** der Antrieb (25) einen längenvariablen Krafterzeuger umfaßt, der einerseits an dem Maschinengestell (1), andererseits an dem Kniegelenk (15) angreift.

## Claims

1. Apparatus for processing a continuously running ahead [sic] strip of material (10),
with an ultrasonic generating unit (6) having a sonotrode (7),
with a counter tool (8) lying opposite the sonotrode (7),
with a machine frame (1), in which the sonotrode (7) and the counter tool (8) are supported,
with means for passing the strip of material (10) through the gap (11) between the sonotrode (7) and the counter tool (8)
and with a drive (25) for setting the sonotrode (7) against the counter tool (8) with rigid and positive-locking support on the machine frame (1),
**characterized**
**in that** the counter tool (8) has a uniform embossing density and located between the drive (25) and the sonotrode (7) is a force measuring element (20), the signal of which serves for regulating the drive (25) so as to provide a constant sonotrode force (Fₛ).

2. Apparatus according to Claim 1, **characterized in that** the sonotrode (7) is displaceable with the ultrasonic generating unit (6) on a common carriage (3) along a linear guide (2) directed against the counter tool (8), **in that** an additional carriage (4) is displaceable along the linear guide (2) on the side on which the drive (25) acts, and **in that** the force measuring element (20) is arranged between the two carriages (3, 4).

3. Apparatus according to Claim 2, **characterized in that** the linear guide (2) is arranged on a machine frame (1) and the drive (25) comprises a mechanical length-variable setting element, which acts on one side on the carriage (4), on the other side on the machine frame (1).

4. Apparatus according to Claim 3, **characterized in that** the length-variable setting element comprises a knee joint (15) having two shanks (16, 17).

5. Apparatus according to Claim. 4, **characterized in that** the drive (25) comprises a length-variable force generator, which acts on one side on the machine frame (1), on the other side on the knee joint (15).

## Revendications

1. Dispositif de traitement d'une bande de matériau (10) qui défile en continu, comprenant un module générateur d'ultrasons (6) qui présente une sonotrode (7), comprenant un contre-outil (8) à l'opposé de la sonotrode (7), comprenant un bâti de machine (1) dans lequel s'appuient la sonotrode (7) et le contre-outil (8), comprenant des moyens pour faire passer le bande de matériau (10) à travers l'espacement (11) entre la sonotrode (7) et le contre-outil (8) et comprenant un mécanisme d'entraînement (25) pour appliquer la sonotrode (7) contre le contre-outil (8) ave un soutien rigide et à fermeture géométrique sur le bâti de machine (1), **caractérisé en ce que** le contre-outil (8) présente une densité de gravure constante et entre le mécanisme d'entraînement (25) et la sonotrode (7) est inséré un élément de mesure de la force (20) dont le signal sert à réguler le mécanisme d'entraînement (25) en vue d'obtenir une force (Fₛ) constante de la sonotrode.

2. Dispositif selon la revendication 1, **caractérisé en ce que** la sonotrode (7) avec le module générateur d'ultrasons (6) peuvent coulisser sur un chariot commun (3) sur un guide droit (2) dirigé en direction du contre-outil (8), qu'un chariot supplémentaire (4) peut coulisser sur le guide droit (2) du côté de la prise du mécanisme d'entraînement (25) et que l'élément de mesure de la force (20) est disposé entre les deux chariots (3, 4).

3. Dispositif selon la revendication 2, **caractérisé en ce que** le guide droit (2) est disposé sur un bâti de machine (1) et le mécanisme d'entraînement (25) comprend un élément de commande à longueur variable qui agit d'un côté sur le chariot (4) et de l'autre côté sur le bâti de machine (1).

4. Dispositif selon la revendication 3, **caractérisé en ce que** l'élément de commande à longueur variable comprend une genouillère (15) qui présente deux branches (16 17).

5. Dispositif selon la revendication 4, **caractérisé en ce que** le mécanisme d'entraînement (25) comprend un générateur de force à longueur variable qui agit d'un côté sur le bâti de machine (1) et de l'autre côté sur la genouillère (15).
